# EUROPÄISCHE PATENTANMELDUNG

(11) **EP 0 557 554 A1**
(43) Veröffentlichungstag der Anmeldung: **01.09.1993**
(21) Anmeldenummer: 92103291.8
(22) Anmeldetag: 26.02.1992
(51) Int. Cl.: G01P 3/46

(54) **Einrichtung zum Erzeugen einer geschwindigkeitsproportionalen elektrischen Grösse**

(71) Anmelder: SIEMENS AKTIENGESELLSCHAFT, D-80333 München (DE)
(72) Erfinder: Schwesig, Günter, Dipl.-Ing. (FH), W-8520 Erlangen (DE); Moser, Roland, W-8430 Neumarkt (DE)

(57) **Zusammenfassung**

Aus zwei um 90° zueinander verschobenen Gebersignalen (S1, S2) mit geschwindigkeitsunabhängiger Amplitude (S0) werden durch Differentiation sinusförmiger Signale (E,F,G,H) mit geschwindigkeitsabhängiger Amplitude gewonnen. Die Scheitelsignale dieser Signale (E,F,G,H) werden zu einem unkorrigierten Geschwindigkeitssignal (J) zusammengefügt. Dieses Signal (J) hat eine Restwelligkeit, die durch ein Korrektursignal (C) beseitigt wird, das durch Zusammenfügen von entsprechenden Scheitelbereichen der in ihrer Amplitude konstanten Gebersignale (S1,S2) gebildet wird.

## Beschreibung

Die Erfindung bezieht sich auf eine Einrichtung zum Erzeugen einer geschwindigkeitsproportionalen elektrischen Größe durch Differentiation zweier in Abhängigkeit von der Bewegungsrichtung um 90° in positiver oder negativer Richtung gegeneinander verschobener sinusförmiger Gebersignale mit geschwindigkeitsunabhängiger Amplitude.

Zur Erfassung von Geschwindigkeit und Position von Maschinenteilen werden häufig Gebersysteme eingesetzt, die zwei um 90° versetzte sinusförmige Signale erzeugen. Üblich sind dabei optische oder magnetische Encoder bzw. Linearmaßstäbe oder Resolver in Verbindung mit zugeordneten Demodulationseinrichtungen.

Eine Einrichtung der eingangs genannten Art ist aus der europäischen Patentschrift 00 80 639 bekannt. Diese Einrichtung hat sich zwar bislang im industriellen Einsatz bewährt, jedoch ist das geschwindigkeitabhängige Ausgangssignale mit einer Welligkeit behaftet, die für höchstwertige Regeleinrichtungen störend ist. Prinzipiell kann eine derartige Welligkeit durch Dämpfung geglättet werden, jedoch würde hierdurch die Dynamik des Gesamtsystems eingeschränkt werden.

Aufgabe der Erfindung ist es, eine Einrichtung der eingangs genannten Art so auszubilden, daß das geschwindigkeitsabhängige Ausgangssignal bereits ohne störende Welligkeit erzeugt wird.

Gemäß der Erfindung wird diese Aufgabe dadurch gelöst, daß für die eine Bewegungsrichtung die aufeinanderfolgenden positiven Scheitelbereiche der durch die Differentiation erzeugten Differentiationssignale sowie zweier jeweils um 180° zu diesen verschobenen Hilfssignalen und für die andere Bewegungsrichtung die aufeinanderfolgenden negativen Scheitelbereiche der durch die Differentiation erzeugten Differentiationssignale sowie der Hilfssignale ein in seiner Amplitude geschwindigkeitsabhängiges in seiner Polarität der Bewegungsrichtung entsprechendes Rohsignal bilden, daß nach Art einer Zweiweggleichrichtung aus den beiden Gebersignalen ein richtungsunabhängiges in seiner Amplitude geschwindigkeitsunabhängiges Korrektursignal generiert wird und daß die geschwindigkeitsproportionale elektrische Größe am Ausgang eines Divisionsgliedes abgreifbar ist, das eine Division des Rohsignals durch das Korrektursignal vornimmt. Durch die Quotientenbildung werden eventuell vorhandene Amplitudenschwankungen der Gebersignale, z.B. hervorgerufen durch Exzentrizität der Glasscheiben bei optischen Gebersystemen, eliminiert.

Eine besonders präzise Erfassung des Korrektursignals ist dadurch möglich, daß als Gleichrichter jeweils ein idealer Gleichrichter verwendet ist.

Dadurch, daß die Umschaltung zwischen den Scheitelbereichen durch ein Schaltglied vorgenommen wird, dem die für das Umschalten signifikanten Positionen durch gesonderte Detektionsmittel zugeleitet werden, ist ein äußerst präzises Generieren des Rohsignals möglich.

In diesem Zusammenhang ergibt sich eine äußerst einfache Schaltungsanordnung dadurch, daß als Detektionsmittel Nulldurchgangsdetektoren für die beiden Gebersignale, ein Amplitudenvergleicher für die gleichgerichteten Gebersignale und ein die bereichsspezifischen Kombinationen der Ausgangssignale der Nulldurchgangsdetektoren sowie des Ausgangssignals des Amplitudenvergleichers als Schaltkriterien ermittelnder Codierer vorgesehen sind.

Ein Ausführungsbeispiel der Erfindung ist in der Darstellung gezeigt und wird im folgenden näher erläutert. Dabei zeigen:
FIG 1 ein Blockschaltbild der Gesamtanordnung,
FIG 2 signifikante Signalverläufe,
FIG 3 einen idealen Gleichrichter,
FIG 4 eine Schwellwertstufe,
FIG 5 ein Differentiationsglied mit Inversionsstufe,
FIG 6 einen Amplitudenvergleicher,
FIG 7 einen Umsetzer und
FIG 8 ein Schaltglied.

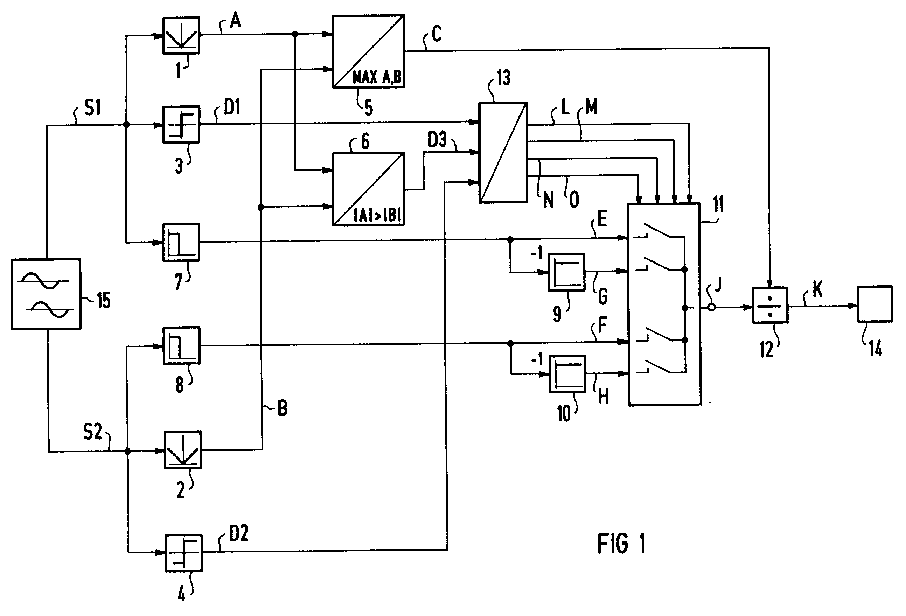

In der Darstellung gemäß FIG 1 ist die erfindungsgemäße Einrichtung in Form eines Blockschaltbildes gezeigt. Von einem rotatorischen Gebersystem, das beispielsweise mit einer Welle eines Antriebs verbunden sein kann, werden drehwinkelabhängig zwei um 90° zueinander versetzten sinusförmige Ausgangssignale als Gebersignale S1 und S2 ausgegeben. Die Amplitude der Gebersignale S1 und S2 ist dabei geschwindigkeitsunabhängig. Zum Generieren eines geschwindigkeitsabhängigen Signals werden deshalb die Gebersignale S1 und S2 an Differentiationsglieder 7 und 8 weitergeleitet. An deren jeweiliegem Ausgang liegt dann ein zwar ebenfalls sinusförmiges phasenverschobenes Signal vor, dessen Amplitude ist jedoch abhängig von der Geschwindigkeit, mit der die Gebereinrichtung 15 rotiert.

Das Ausgangssignal des Differentiationsgliedes 7 gelangt als differenziertes Gebersignal E an ein Schaltglied 11. Dieses Signal E wird ferner über eine Inversionsstufe 9 invertiert und gelangt als differenziertes und invertiertes Gebersignal G ebenfalls an das Schaltglied 11. In entsprechender Weise wird das Ausgangssignal des Differentiationsgliedes 8 als differenziertes Gebersignal F an das Schaltglied 11 weitergeleitet und ein über eine Inversionsstufe 10 dazu inverses Signal wird als differenziertes und invertiertes Gebersignal H ebenfalls dem Schaltglied 11 zugeleitet. Die Signale E und F werden im folgenden auch als Differentiationssignale und die Signale G und H als Hilfssignale bezeichnet.

Zunächst werden für die eine Drehrichtung die aufeinanderfolgenden positiven Scheitelbereiche der durch die Differentiation erzeugten Differentiationssignale E und F sowie der Hilfssignale G und H und für die andere Drehrichtung die aufeinanderfolgenden negativen Scheitelbereiche der durch die Differentiation erzeugten Differentiationssignale sowie der Hilfssignale zu einem mit einer Welligkeit behafteten Rohsignal J zusammengefügt. Dies erfolgt durch eine Schaltung, bei der das Gebersignal S1 einem Nulldurchgangsdetektor 3 zugeleitet wird, an dessen Ausgang ein binäres Signal D1 vorliegt. Das Gebersignal G2 wird einem Nulldurchgangsdetektor 4 zugeleitet, an dessen Ausgang ein Ausgangssignal D2 vorliegt. Ferner wird das Gebersignal S1 einem idealen Gleichrichter 1 zugeleitet, an dessen Ausgang demzufolge ein gleichgerichtetes Gebersignal A vorliegt. Das Gebersignal S2 wird einem Idealgleichrichter 2 zugeleitet, an dessen Ausgang ein Signal B vorliegt. Die Signale A und B gelangen an einen Amplitudenvergleicher 6, der stets dann, wenn das Signal A betragsmäßig das Signal B überschreitet, ein Ausgangssignal logisch "1" an einen Codierer 13 gibt, dem auch die Signale D1 und D2 zugeleitet werden. Der Codierer 13 gibt Steuersignale L, M, N und O an das Schaltglied 11. Die gewünschte Zusammensetzung der Signale E, F, G und H zum Rohsignal J wie im folgenden noch näher erläutert.

Die Ausgangssignale A und B der idealen Gleichrichter 1 und 2 werden zusätzlich einem Umsetzer 5 zugeleitet, der an seinem Ausgang stets das größere der beiden Eingangssignale als Korrektursignal C durchschaltet. Dieses Korrektursignal C hat damit eine Welligkeit, die derjenigen des Rohsignals J entspricht, doch ist das Korrektursignal C in seiner Amplitude geschwindigkeitsunabhängig. Insofern wird dadurch, daß das Rohsignal J einem Divisionsglied 12 zugeleitet wird, das eine Division durch eben das Korrektursignal C vornimmt, ein Eliminieren der Welligkeit erreicht. Das Ausgangssignal am Divisionsglied kann dann als drehzahlproportionales Drehzahlsignal K weiteren Verarbeitungseinrichtungen 14 (z.B. Drehzahlregler) zugeleitet werden.

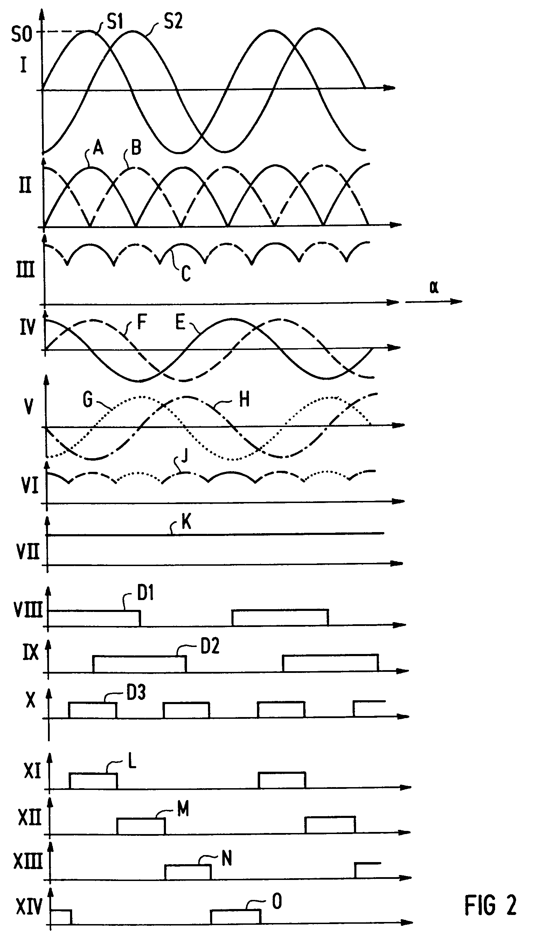

Im Blockschaltbild der Darstellung gemäß FIG 1 sind die Signale jeweils mit Buchstaben bezeichnet. Wesentliche Signale aus der Schaltung sind zueinander korrespondierend in der Darstellung gemäß FIG 2 gezeigt.

Das Diagramm I der FIG 2 zeigt dabei die Gebersignale S1 und S2. Diese weisen, wie eingangs geschildert, eine konstante Amplitude S0 auf. In Abszissenrichtung ist jeweils der Drehwinkel "alpha" der Gebereinrichtung 15 aufgetragen.

Das Diagramm II zeigt mit einer durchgezogenen Linie das Ausgangssignal des Idealgleichrichters 1, d.h. das aus dem Gebersignal S1 ermittelte gleichgerichtete Signal A. In gestrichelter Weise ist das Signal B gezeigt, das aus dem Gebersignal 2 generiert wird.

Das Diagramm III zeigt das Korrektursignal C, wie es am Ausgang des Umsetzers 5 vorliegt. Das Korrektursignal C ist dabei durch ein Zusammensetzen der Scheitel der Signale A und B realisiert, was in der Darstellung im Diagramm III dadurch angedeutet ist, daß die dem Signal B zugeordneten Abschnitte des Signals C gestrichelt und die dem Signal A zugeordneten Abschnitte des Signals C durchgezogen angedeutet sind.

Im Diagramm IV sind die Signale E und F für eine ein Betrachtungszeitraum als konstant angeordnete Geschwindigkeit dargestellt. Das Signal E ist durch Differentiation aus dem Gebersignal S1 entstanden, das gestrichelt dargestellte Signal F ist durch Differentiation aus dem Gebersignal S2 entstanden. Die Amplitude der Signale E und F ist dabei geschwindigkeitsproportional. In der Darstellung V sind die durch Inversion aus den Diffe

rentiationssignalen E und F entstandene Hilfssignale G und H gepunktet bzw. strichpunktiert gezeigt.

In der Darstellung VI ist das in seiner Amplitude geschwindigkeitsabhängige Rohsignal J gezeigt, das durch Addition der Scheitelbereiche der Signale E bis H wie im folgenden noch geschildet, erzeugt wird. Die dem Differentiationssignal E zugeordneten Abschnitte des Rohsignals J sind dabei durchgezogen gezeichnet, die dem Differentiationssignal F zugeordneten Abschnitte sind gestrichelt dargestellt, die dem Hilfssignal G zugeordneten Abschnitte sind gepunktet gezeichnet und die dem Hilfssignal H zugeordneten Abschnitte sind strichpunktiert symbolisiert.

In der Darstellung VII ist das Drehzahlsignal K am Ausgang des Divisionsgliedes 12 gezeigt, das aufgabengemäß linearisiert ist.

Die Binärsignale an den Ausgängen der Nulldurchgangsdetektoren 3 und 4 sowie am Amplitudenvergleicher 6 sind als Signale D1, D2 und D3 in Diagrammen VIII, IX und X gezeigt. Das Zusammenspiel dieser Binärsignale wird, wie im folgenden noch näher geschildet, dazu herangezogen, die Scheitelbereiche der Differentiationssignale E und F und der Hilfssignale G und H zum Rohsignal J zusammenzufügen. Auf die Signalverläufe XI, XII, XIII und XIV wird ebenfalls noch eingegangen.

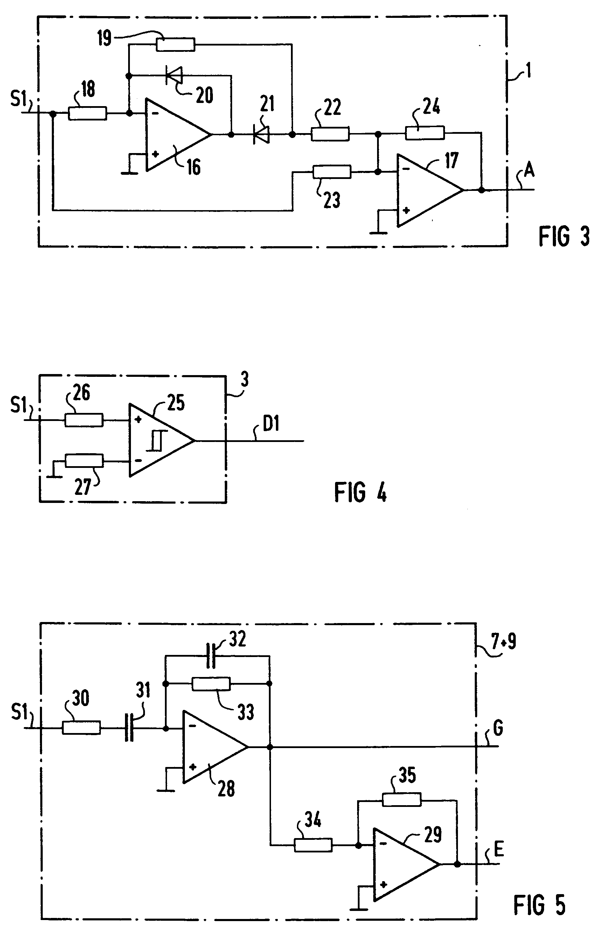

In der Darstellung gemäß FIG 3 ist eine Prinzipschaltung für den idealen Gleichrichter 1 gemäß FIG 1 gezeigt. Der Gleichrichter 2 wäre prinzipiell in gleicher Weise aufgebaut. Bei dieser Gleichrichterschaltung handelt es sich um eine übliche Schaltung mit zwei Operationsverstärkern 16 und 17, wobei der Operationsverstärker 16 durch die Beschaltung mit den Dioden 20 und 21 die ansonsten bei einem reinen Diodengleichrichter vorliegende Schwellenspannung eliminiert. Die Widerstände R18 bis R24 dienen zur Einstellung der jeweiligen Spannungsverhältnisse.

In der Darstellung gemäß FIG 4 ist ein Nulldurchgangsdetektor 3 zur Verwendung in der Schaltung gemäß FIG 1 dargestellt. Dieser Nulldurchgangsdetektor besteht aus einem Komparator 25, der mit seinem invertierendem Eingang über einen Widerstand 27 gegen die Masse geschaltet ist und dessen nicht invertierendem Eingang über einen Widerstand 26 das Signal S1 zuleitbar ist. Am Ausgang des Differenzverstärkers 25 steht dann das binäre Signal D1 an, das bei positiver Polarität des Signals S1 einen Wert logisch "1" aufweist.

Der Nulldurchgangsdetektor 4 ist identisch ausgebildet.

In der Darstellung gemäß FIG 5 ist eine Schaltung dargestellt, die das Differentiationsglied 7 und die Inversionsstufe 9 beinhaltet. Hier sind zwei Operationsverstärker 28 und 29 vorgesehen, die hinsichtlich ihrer Verstärkung durch Widerstände 30, 33, 34 und 35 eingestellt sind. Die Differentiation wird durch den Einsatz der Kondensatoren 31 und 32 erreicht. Am Ausgang des Operationsverstärkers 28 steht dann das invertierte und differenzierte Signal als Hilfssignal G an. Der Einsatz des Operationsverstärkers 29 ergibt daraus das Differentiationssignal E. Die Anordnung des Differenzialgliedes 8 und der Inverstionsstufe 10 ist identisch ausgebildet.

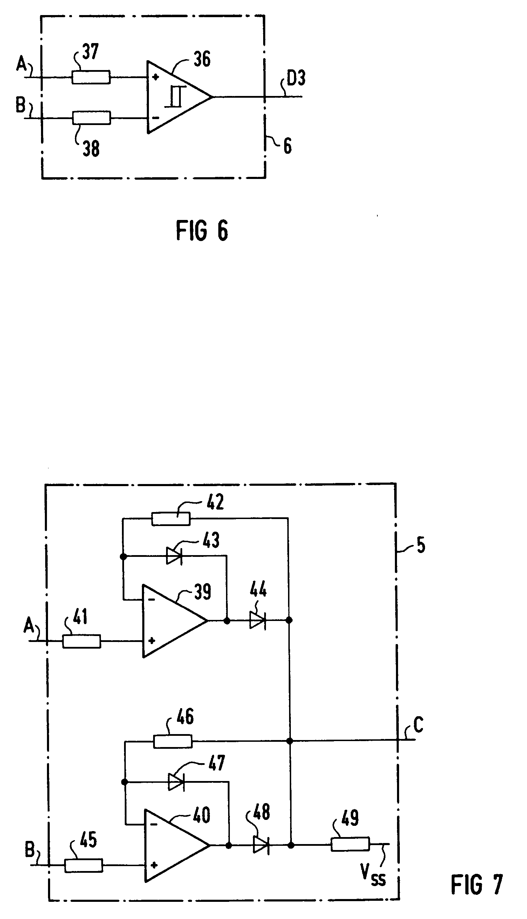

In der Darstellung gemäß FIG 6 ist eine Schaltung für den Amplitudenvergleicher 6 gezeigt. Dabei wird ein Komparator 36 vom Signal A über einen Widerstand 37 und vom Signal B über einen Widerstand 38 beaufschlagt. Stets dann, wenn das Signal A größer ist als das Signal B, liegt ein Signal logisch "1" am Ausgang des Operationsverstärkers 36 an.

In der Darstellung gemäß FIG 7 ist der Umsetzer 5 gezeigt, der zwei Operationsverstärker 39 und 40 beinhaltet, in deren Beschaltung Widerstände 41, 42, 45, 46 und 49 und Dioden 43, 44, 47 und 48 vorgesehen sind. Eine Versorgungsspannung V_{SS} wird dabei über einen Widerstand 49 eingespeist. Diese Schaltung führt dazu, daß am Ausgang für das Korrektursignal C stets das größere der beiden Signale A und B ansteht. Dabei ist auch bei dieser Schaltung eine Freiheit von Einflüssen durch Schwellwertspannungen gegeben.

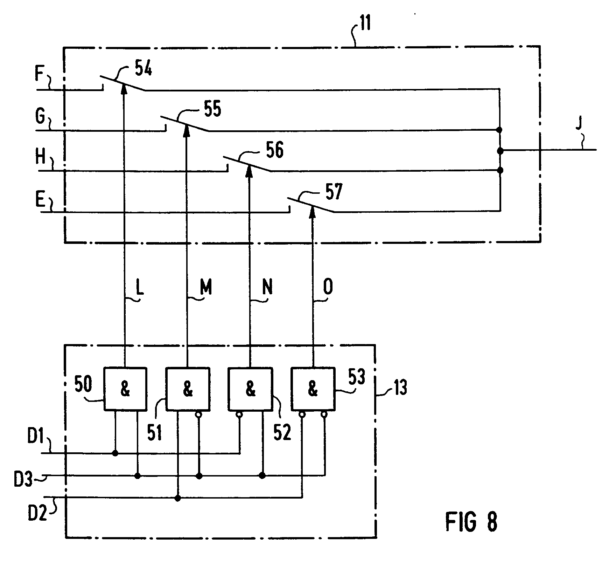

Während bei den Darstellung der Figuren 3 bis 7 übliche bzw. sich dem Fachmann anbietende Schaltungen zu den bereits für sich sprechenden Funktionsblöcken nach FIG 1 gezeigt sind, wird in der Darstellung gemäß FIG 8 das Zusammenspiel des Codierers 13 und des Schaltgliedes 11 gezeigt, das für die Funktion der Schaltung gemäß FIG 1 sehr wesentlich ist.

Zunächst werden im Codierer 13 die Signale D1, D2 und D3 den Eingängen von UND-Gliedern 50, 51, 52 und 53 zugeleitet und stets dann, wenn am Ausgang der UND-Glieder 50, 51, 52 oder 53 ein Signal logisch "1" vorliegt, wird ein jeweils zugeordnetes Schaltelement, in der Darstellung Schalter 54, 55, 56 und 57 des Schaltglieds 11 geschlossen.

Zur Erläuterung des Schaltens wird in diesem Zusammenhang nochmals auf die Darstellung gemäß FIG 2 verwiesen. Stets dann, wenn das Signal D3 den Zustand logisch "1" einnimmt und gleichzeitig das Signal D1 ebenfalls den Zustand logisch "1" beinhaltet, wird ein Signal L (Diagramm XI) ausgelöst, welches das Signal F durchschaltet. Stets dann, wenn das Signal D3 den Zustand logisch "0" aufweist und das Signal D2 als logisch "1" vorliegt, wird ein Signal M (Diagramm XII) ausgelöst und dadurch das Signal G durchgeschaltet. Stets dann, wenn das Signal D3 den Zustand logisch "1" aufweist und das Signal D1 den Zustand logisch "0" aufweist, wird das Signal N (Diagramm XIII) ausgelöst und demzufolge das Signal H durchgeschaltet. Stets dann, wenn das Signal D3 den Zustand logisch "0" aufweist und das Signal D2 ebenfalls den Zustand logisch "0" aufweist, wird das Signal 0 ausgelöst (Diagramm XIV) und das Signal E durchgeschaltet.

## Patentansprüche

1. Einrichtung zum Erzeugen einer geschwindigkeitsproportionalen elektrischen Größe durch Differentiation zweier in Abhängigkeit von der Bewegungsrichtung um 90° in positiver oder in negativer Richtung gegeinander verschobener sinusförmiger Gebersignale mit geschwindigkeitsunabhängiger Amplitude, **dadurch gekennzeichnet,** daß für die eine Bewegungsrichtung die aufeinanderfolgenden positiven Scheitelbereiche der durch die Differentiation erzeugten Differentiationssignale (E,F) sowie zweier jeweils um 180° zu diesen verschobenen Hilfssignalen (G,H) und für die andere Bewegungsrichtung die aufeinanderfolgenden negativen Scheitelbereiche der durch die Differentiation erzeugten Differentiationssignale (E,F) sowie der Hilfssignale (G,H) ein in seiner Amplitude geschwindigkeitsabhängiges in seiner Polarität der Bewegungsrichtung entsprechendes Rohsignal (J) bilden, daß nach Art einer Zweiweggleichrichtung aus den beiden Gebersignalen (S1,S2) ein richtungsunabhängiges in seiner Amplitude geschwindigkeitsunabhängiges Korrektursignal (C) generiert wird und daß die geschwindigkeitsproportionale elektrische Größe (K) am Ausgang eines Divisionsgliedes (12) abgreifbar ist, das eine Division des Rohsignals (J) durch das Korrektursignal (C) vornimmt.

2. Einrichtung nach Anspruch 1, **dadurch gekennzeichnet,** daß als Gleichrichter jeweils ein idealer Gleichrichter (1,2) verwendet ist.

3. Einrichtung nach Anspruch 1 oder 2, **dadurch gekennzeichnet,** daß die Umschaltung zwischen den Scheitelbereichen durch ein Schaltglied (11) vorgenommen wird, dem die für das Umschalten signifikanten Positionen durch gesonderte Detektionsmittel (3,4,6, 13) zugeleitet werden.

4. Einrichtung nach Anspruch 3, **dadurch gekennzeichnet,** daß als Detektionsmittel Nulldurchgangsdetektoren (3,4) für die beiden Gebersignale (S1, S2), ein Amplitudenvergleicher (6) für die gleichgerichteten Gebersignale (A,B) und ein die bereichsspezifischen Kombinationen der Ausgangssignale (D1,D2) der Nulldurchgangsdetektoren (3,4) sowie des Ausgangssignals (D3) des Amplitudenvergleichers (6) als Schaltkriterien ermittelnder Codierer (13) vorgesehen sind.
